# EUROPÄISCHE PATENTSCHRIFT

(11) **EP 1 950 822 B1**
(45) Veröffentlichungstag und Bekanntmachung des Hinweises auf die Patenterteilung: **25.08.2010**
(21) Anmeldenummer: 07020102.5
(22) Anmeldetag: 15.10.2007
(51) Int. Cl.: H01M 2/16

(54) **Lage mit abgeschirmten Fasern und elektrochemische Zelle**
Layer with insulated fibres and electrochemical cell
Couche dotée de fibres blindées et cellule électronique

(30) Priorität: 23.01.2007 DE 102007004257
(43) Veröffentlichungstag der Anmeldung: 30.07.2008
(73) Patentinhaber: Carl Freudenberg KG, 69469 Weinheim (DE)
(72) Erfinder: Kritzer, Peter, Dr., 67147 Forst (DE); Schilling, Holger, Dr., 79423 Heitersheim (DE)

(56) Entgegenhaltungen:
- EP-A- 0 538 604
- EP-A- 1 689 007
- JP-A- 6 111 801
- US-A1- 2002 160 260
- KRITZER P: "Separators for nickel metal hydride and nickel cadmium batteries designed to reduce self-discharge rates" JOURNAL OF POWER SOURCES, ELSEVIER, AMSTERDAM, NL, Bd. 137, Nr. 2, 29. Oktober 2004 (2004-10-29), Seiten 317-321, XP004610238 ISSN: 0378-7753

## Beschreibung

### Technisches Gebiet

Die Erfindung betrifft eine Lage gemäß dem Oberbegriff des Patentanspruchs 1. Die Erfindung betrifft des Weiteren eine elektrochemische Zelle.

### Stand der Technik

Aus der EP 1 689 007 A1 ist eine Lage bekannt, bei welcher ein Stoff zur Ammoniakbindung im Mantel einer Kern-Mantel-Faser aufgenommen ist. Die EP 0 538 604 A1 offenbart eine Lage mit Mehrkomponentenfasern, wobei jede Komponente eine exponierte Oberfläche aufweist. "Journal of Power Sources", Elsevier, Amsterdam, NL, Bd. 137, Nr. 2, 29 (2004-10-29), Seiten 317-321, XP004610238 ISSN: 0378-7753 offenbart Lagen, die etwa 200 µm große Inseln eines funktionalisierten Polymers die auf der Lage aufliegen.

Alkalische Batterien oder Zellen benötigen Separatormaterialien, die besondere Eigenschaften aufweisen. Zu diesen Eigenschaften zählen eine Beständigkeit gegen den Elektrolyten, die Beständigkeit gegen Oxidation, eine hohe mechanische Stabilität, eine geringe Dicke, ein geringer Ionendurchgangswiderstand, ein hoher Elektronendurchgangswiderstand, ein Rückhaftevermögen für von den Elektroden abgelöste Feststoffpartikel, eine permanente Benetzbarkeit durch den Elektrolyten und ein hohes Speichervermögen für die Elektrolytflüssigkeit.

Nickel-/Metallhydrid- oder Nickel-/Cadmium-Akkumulatoren zeigen eine beschleunigte Selbstentladung. Der Ladungstransport erfolgt durch Ionen oder Moleküle, welche in Elektrolyten von der negativen Cadmium- oder Metallhydridelektrode zur positiven Nickeloxidelektrode transportiert und dort elektrochemisch umgewandelt werden. Die Zelle entlädt sich langsam von selbst auch im Ruhezustand.

Als Mechanismus für diese unerwünschte Selbstentladung werden Stickstoffverbindungen diskutiert, die in einem so genannten "Shuttle-Mechanismus" durch Reduktion an der negativen Elektrode und durch Oxidation an der positiven Elektrode für die Selbstentladung verantwortlich sind.

Die gattungsbildenden Lagen vermindern die Selbstentladung dadurch, dass die Lage Ammoniak chemisch und/ oder physikalisch bindet und dadurch die Entladung verlangsamt.

Dennoch zeigen die gattungsbildenden elektrochechemischen Zellen eine derart schnelle Selbstentladung, dass sie für viele Einsatzzwecke, beispielsweise für den Einsatz in Hybridfahrzeugen, ungeeignet sind. Zudem weisen die gattungsbildenden elektrochemischen Zellen eine unzureichende Langzeitstabilität hinsichtlich Selbstentladung auf, was unter anderem durch den chemischen bzw. elektrochemischen Abbau des Separators erklärt werden kann.

### Darstellung der Erfindung

Der Erfindung liegt daher die Aufgabe zugrunde, eine elektrochemische Zelle zu schaffen, welche eine geringe Selbstentladung während ihres gesamten Lebenszyklus aufweist.

Die vorliegende Erfindung löst die zuvor genannte Aufgabe durch die Merkmale des Patentanspruchs 1.

Danach ist die eingangs genannte Lage dadurch gekennzeichnet, der erste Stoff als erstes Polymer ausgebildet ist und der zweite Stoff als zweites, sich vom ersten Polymer unterscheidendes Polymer ausgebildet ist, wobei das erste und das zweite Polymer als Polyolefine ausgebildet sind und wobei das erste Polymer als Polyolefin ausgebildet ist, welches durch ungesättigte organische Säuren und/ oder Säurederivate modifiziert ist.

Überraschend hat sich gezeigt, dass die erfindungsgemäße Lage eine erhöhte Beständigkeit gegenüber chemischem bzw. elektrochemischen Abbau aufweist. Dies ist insbesondere dann vorteilhaft, wenn die Lage in einer elektrochemischen Zelle in Hybridfahrzeugen oder sonstigen Applikationen, bei denen eine hohe Lebensdauer erforderlich ist, eingesetzt wird.

Erfindungsgemäß ist erkannt worden, dass die erhöhte Beständigkeit dadurch erzielt wird, dass der erste Stoff von einem zweite Stoff abgeschirmt wird.

Überraschenderweise führt diese Abschirmung zu einer erhöhten Wirkungsdauer des Selbstentladungsreduzierenden Effektes in einer elektrochemischen Zelle, in welcher die erfindungsgemäße Lage eingesetzt wird.

Überraschend blockiert die Umhüllung die Bindung von Ammoniak nicht, sondern wirkt zusätzlich als Alterungsschutz der umhüllten Volumenbereiche.

Während sich das Ammoniakbindevermögen eine Lage nach dem Stand der Technik nach einer Lagerung in heißer Kalilauge (Simulation einer Langzeitbenutzung in einer Batterie) deutlich verringert (das Bindevermögen geht um ca. 50% und mehr zurück), zeigen die erfindungsgemäßen Fasern einen solchen Funktionsabbau nahezu nicht.

Überraschend ist vor allem die Tatsache, dass die Ammoniakbindung auch dann noch wirkt, wenn der funktionelle Volumenbereich vollständig von einer nicht-funktionellen Umhüllung umgeben ist.

Die Volumenbereiche sind als Kerne und die Fasern als Kern-Mantel-Fasern ausgebildet. Kern-Mantel-Fasern sind relativ einfach herstellbar. Des Weiteren erlaubt die Ausgestaltung als Kern-Mantel-Faser eine nahezu vollständige Abschirmung des ersten Stoffs durch den zweiten Stoff. Bei dieser Ausgestaltung ist der erste Stoff im Kern und der zweite Stoff im Mantel angeordnet. Insbesondere könnte der Kern vollständig aus dem ersten Stoff bestehen und der Mantel vollständig aus dem zweiten Stoff bestehen.

Zumindest ein erster Stoff ist als erstes Polymer ausgebildet und der zweite Stoff als zweites, sich vom ersten Polymer unterscheidendes Polymer.

Indem das erste Polymer sich vom zweiten Polymer unterscheidet, ist sichergestellt, dass sich zwischen den Polymeren eine Grenzschicht ausbildet, welche die Wanderung der funktionellen Gruppen des ersten, inneren Polymers an die Faseroberfläche hemmt. Durch diese Hemmung der Wanderung wird bewirkt, dass die Anlagerung von Ionen oder Molekülen, die hinsichtlich ihres Anlagerungsverhaltens dem Ammoniak chemisch ähnlich sind und dadurch der Ammoniakbindung konkurrierend gegenüberstehen würden, reduziert wird. Hierdurch wird die Belegung der funktionellen Gruppen unterdrückt, so dass diese für die Bindung von Ammoniak bzw. Ammoniakverbindungen für einen langen Zeitraum zur Verfügung stehen.

Das erste und das zweite Polymer sind als Polyolefine ausgebildet. Auch in diesem Fall unterscheidet sich stets das erste Polymer vom zweiten Polymer. Polyolefine sind sehr gut widerstandsfähig gegen den chemischen Angriff durch stark alkalische Elektrolyten und gegen Oxidatione in chemischem Umfeld elektrochemischer Zellen. Daher stellen Polyolefin Materialien dar, mit denen eine sehr stabile Lage herstellbar ist.

Das erste Polymer ist als Polyolefin ausgebildet, welches durch ungesättigte organische Säuren und/oder Säurederivate modifiziert ist. Diese Modifizierung steigert das Ammoniakbindevermögen der Lage. Vor diesem Hintergrund ist ganz konkret denkbar, dass das erste Polymer als Polyolefin ausgestaltet ist, welches durch reaktive Extrusion oder Pfropfung mit Acrylsäure modifiziert ist. Die Verwendung von Acrylsäure erhöht das Ammaniakbindevermögen in besonderem Maße.

Folglich ist die eingangs genannte Aufgabe gelöst.

Die Lage könnte einen Anteil an den zuvor beschriebenen Fasern von mindestens 30 Gew.-% aufweisen. Diese konkrete Ausgestaltung hat sich als vorteilhaft erwiesen, um der Lage einerseits eine ausreichend hohe mechanische Stabilität zu verleihen und andererseits die Selbstentladung einer elektrochemischen Zelle wirkungsvoll zu unferdrücken.

Das erste oder das erste und zweite Polymer könnten als durch Copolymerisation gebildete Polymere ausgebildet ein. Dabei ist denkbar, dass entweder das innen liegende Polymer durch Copolymerisation entstanden ist oder aber dass beide Polymere durch Copolymerisation entstanden sind. In jedem Fall unterscheidet sich das erste Polymer jedoch von dem zweiten Polymer. Die Durchführung einer Copolymerisation liefert ein Material, welches eine besonders homogene und stabile innere Struktur aufweist. Hierdurch ist sichergestellt, dass chemisch aktive Moleküle in besonders vorteilhafter Weise in einem Volumen verteilt sind.

Das erste oder das erste und das zweite Polymer könnten als durch Pfropfung gebildete Polymere ausgebildet sein. Auch in diesem Fall unterscheidet sich stets das erste Polymer vom zweiten Polymer. Vor diesem Hintergrund ist insbesondere denkbar, dass die Polymere in einer Schmelze oder Lösung oder in einer Dispersion oder in gemahlenem Zustand vorliegend mit Acrylsäure oder anderen ungesättigten Säuren oder Säurederivaten gepfropft werden und diese anschließend zu Fasern gesponnen werden.

Alternativ könnten Fasern, die bereits einen wie vorab beschrieben modifizierten Kern aufweisen, in einer Dispersion nach dem Spinnen mit Acrylsäure gepfropft werden, wodurch eine modifizierte äußere Schicht entstünde. Danach könnten die Fasern ohne weitere chemische Modifizierung in nachgelagerten Prozessen zu einem Vliesstoff weiterverarbeitet werden.

Das erste oder das erste und das zweite Polymer könnten als durch reaktive Extrusion gebildete Polymere ausgebildet sein. Auch in diesem Fall unterscheidet sich stets das erste Polymer vom zweiten Polymer. Bei der reaktiven Extrusion könnten die Polymere derart funktionalisiert werden, dass sie funktionelle Gruppen im Molekül aufweisen oder im alkalischen Elektrolyten ausbilden, welche Ammoniak oder Ammoniakverbindungen aus alkalischen Lösungen binden. Vor diesem Hintergrund könnte die Polymere funktionelle Gruppen enthalten, welche im alkalischen Medium als Lewis-Säuren wirksam sind. Diese konkrete Ausgestaltung stellt sicher, dass durch die funktionellen Gruppen Ammoniak oder Ammoniakverbindungen in alkalischer Lösung gebunden werden können.

Zwischen dem ersten Polymer und dem sich von dem ersten Polymer unterscheidenden zweiten Polymer könnte eine Grenzschicht ausgebildet sein. Durch die Grenzschicht zwischen den beiden unterchiedlichen Polymeren ist eine Wanderung der funktionellen Gruppen des Kern-Polymers an die Faseroberfläche und deren damit verbundene Verlust der Funktionalität durch Anlagerung von mit Ammoniak konkurrierenden Molekülen sowie durch chemischen bzw. elektrochemischen Abbau gehemmt.

Das umhüllende Polymer könnte in einem teilamorphen Zustand vorliegen. Hierbei bilden die amorphen Bereiche Mikrokanäle aus. Ein Ammoniak-Molekül kann durch diese Mikrokanäle hindurch diffundiere, sich am ersten, inneren Polymer anlagern und an dieses gebunden werde. Die mit einer Hydrathülle umlagerten Kalium- bzw. Hydroxidionen, die im Elektrolyten der elektrochemischen Zellen in großem Maße vorhanden sind, sind bedeutend größer als das Ammoniak-Molekül. Diese größeren Ionen können die Mikrokanäle nicht durchwandern und somit das vom ersten Polymer gebundene Ammoniak nicht verdrängen oder ersetzen.

Die Lage könnte in einer Batterie ein Ammoniakbindevermögen von mindestens 0,1 mmol/g, vorzugsweise von mindestens 0,25 mmol/g Lagenmaterial aufweisen. Diese ausgewählten Werte stellen charakteristische Werte dar, bei denen die Entladungsdauer einer elektrochemischen Zelle besonders deutlich verlängert wird.

Das Ammoniakbindevermögen der Lage könnte nach achttägiger Lagerung in einer 85°C heißen, 30%igen, wässrigen Kalilauge mindestens 50% des Ausgangswertes betragen. Der Ausgangswert des Ammoniakbindevermögens beträgt hierbei 0,1 mmol/g. Eine solche Lage ist für Langzeitanwendungen unter Realbedingungen als Separator in Batterien besonders geeignet.

Neben den hier beschriebenen Fasern mit ersten und zweiten Stoffen könnten weitere, sich von diesen unterscheidende zweite Fasern vorliegen, die gegenüber konzentrierter Lauge hydrolysebeständig sind. Die Vorkehrung dieser zweiten Fasern kann die mechanische Stabilität der Lage erhöhen.

Um eine gute Benetzbarkeit zu erreichen, könnte die Lage hydrophile Eigenschaften, insbesondere hydrophile Oberflächen, aufweisen. Diese könnten durch einen Fluorierungsprozess, eine Plasmabehandlung oder durch eine Sulfonierung erzielt werden. Denkbar ist auch, die Lage durch polare, ungesättigte, organische Substanzen zu pfropfen. Vor diesem Hintergrund ist auch denkbar, auf die Lage ein Netzmittel aufzubringen. Netzmittel sind kommerziell problemlos erhältlich.

Die Lage könnte ein Flächengewicht von 15 - 300 g/m², vorzugsweise von 25 - 150 g/m² aufweisen. Dies stellt sicher, dass die Lage ein ausreichendes Fluidaufnahmevermögen und zugleich genügend kleine Poren aufweist, so dass elektrische Durchschläge durch leitfähige Partikel nahezu nicht auftreten.

Die Lage könnte eine Dicke von 20 bis 400 µm, vorzugsweise von 40 bis 250 µm, aufweisen. Der Bereich stellt sicher, dass eine elektrochemische Zelle mit gebrauchstauglichen Innen- und Außendimensionen realisierbar ist.
Ein Separator könnte aus zwei oder mehreren der hier beschriebenen Lagen bestehen. Mehrlagige Separatoren können Fehlstellen in den Lagen besser kompensieren als einlagige. Dies eignet die mehrlagigen Separatoren für Langzeitapplikationen. Es ist darüber hinaus denkbar, dass sich die verschiedenen Lagen hinsichtlich Flächengewicht bzw. Dicke voneinander unterscheiden können, wobei der Separator in seinem Aufbau einen Gradienten bezüglich der Dicke oder des Flächengewichts zeigt.

Die Lage könnte als Vliesstoff ausgestaltet sein. Vliesstoffe sind durch eine Vielzahl von Verfahren kostengünstig herstellbar. Zudem stellt die Verwendung von Vliesstoffen, die in einem statistischen Prozess hergestellt werden, eine sehr gute Homogenität der Lage sicher und vermeidet das Auftreten von durchgehenden Löchern ("pin holes").

Vor diesem Hintergrund ist denkbar, dass der Vliesstoff durch eine Nassvlies-Technologie gefertigt ist. Diese Fertigung stellt sicher, dass die Vliesstoffe eine hohe Homogenität aufweisen.

Denkbar ist auch, den Vliesstoff durch eine Trockenvlies-Technologie zu fertigen. Diese Technologie beaufschlagt das Vliesstoffmaterial nicht mit Medien, welche das Vliesstoffmaterial in seiner Stabilität negativ beeinflussen.

Der Vliesstoff könnte auch mittels einer Spinnvlies- oder Meltblown-Technologie gefertigt sein, die eine Herstellung von Bikomponenten erlaubt.

Diese Fertigung erlaubt die Herstellung von sehr dünnen Fasern und daher von Vliesstoffen hoher spezifischer Oberfläche.

Die eingangs genannte Aufgabe ist des Weiteren durch eine elektrochemische Zelle mit den Merkmalen des Patentanspruchs 29 gelöst. Um Wiederholungen in Bezug auf die erfinderische Tätigkeit zu vermeiden, sei auf die Ausführungen zur Lage als solcher verwiesen.

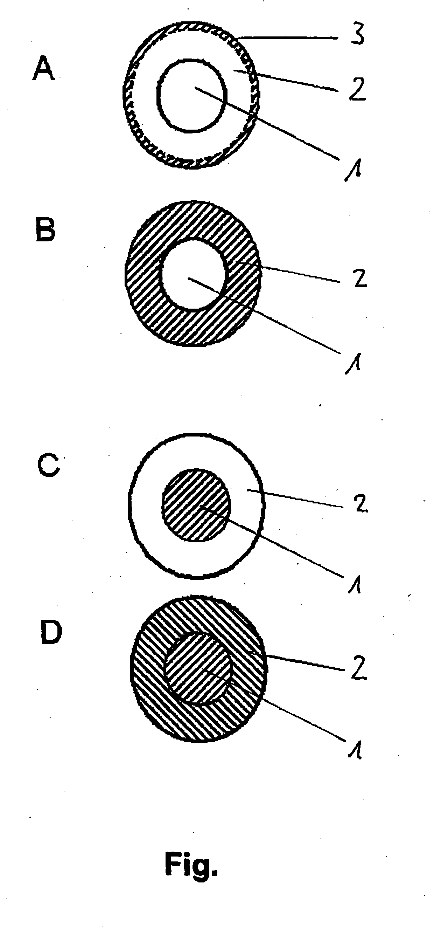

Es gibt nun verschiedene Möglichkeiten, die Lehre der vorliegenden Erfindung auf vorteilhafte Weise auszugestalten und weiterzubilden. Dazu ist einerseits auf die den nebengeordneten Patentansprüchen 1 und 29 nachgeordneten Ansprüche, andererseits auf die nachfolgende Erläuterung bevorzugter Ausführungsbeispiele der Erfindung anhand der Tabellen und der Zeichnung zu verweisen.

In Verbindung mit der Erläuterung der bevorzugten Ausführungsbeispiele der Erfindung anhand der Tabellen und der Zeichnung werden auch im Allgemeinen bevorzugte Ausgestaltungen und Weiterbildungen der Lehre erläutert.

### Kurzbeschreibung der Zeichnung

In der Zeichnung zeigte die einzige
- Fig.: eine schematische Darstellung von Kem-Mantel-Fasem.

### Ausführung der Erfindung

Die einzige Fig. zeigt Kern-Mentel-Fasertypen nach dem Stand der Technik und gemäß der vorliegenden Erfindung.

Die Fasertypen A und B und D sind aus dem Stand der Technik bereits bekannt. Fasertyp A weist im Kern 1 ein Polymer auf, welches kein Ammoniakbindevermögen zeigt. Das Polymer des Mantels 2 zeigt ebenfalls kein Ammoniakbindevermögen. Lediglich die Oberfläche 3 des Mantels 2 ist derart funktionalisiert, dass die Faser im Bereich der Oberfläche ein Ammoniakbindevermögen zeigt. In diesem Bereich ist das zweite Polymer des Mantels 2 so funktionalisiert, dass es ein Ammoniakbindevermögen zeigt. Stand der Technik sind hierbei die Prozesse der Sulfonierung bzw. des Pfropfens von ungesättigten Substanzen wie Acrylsäure.

Fasertyp B zeigt ein erstes Polymer im Kern 1, welches kein Ammoniakbindvermögen zeigt. Das zweite Polymer, welches den Mantel 2 ausbildet, ist derart funktionalisiert, dass es ein Ammoniakbindevermögen aufweist.

Fasertyp D weist im Kern 1 ein erstes Polymer auf, welches derart funktionalisiert ist, dass es ein Ammoniakbindevermögen zeigt. Das zweite Polymer des Mantels 2, welches sich vom ersten Polymer des Kerns 1 unterscheidet, ist ebenfalls funktionalisiert. Die Funktionalisierung des zweiten Polymers verleiht diesem ebenfalls ein Ammoniakbindevermögen.

Der Fasertyp C findet in erfindungsgemäßen Lagen Verwendung.

In Fasertyp C ist lediglich das Polymer des Kerns 1 derart funktionalisiert, dass es ein Ammoniakbindevermögen zeigt. Es wird von einem zweiten Polymer umhüllt, welches kein Ammoniakbindevermögen zeigt.

Eine weitere Ausgestaltung des Fasertyps C oder D könnte ein funktionalisiertes Polymer im Kern und ein nichtfunktionalisiertes Polymer im Mantel aufweisen, wobei das Polymer im Mantel wie im Fasertyp B beschrieben nachträglich oberflächenfunktionalisiert sein könnte.

Für die Bestimmung des Ammoniakbindevermögens der nachfolgend beschriebenen Ausführungsbeispiele wird folgendes Verfahren eingesetzt:

Etwa 2 g des als Faser- bzw. Separatormaterials vorgesehenen Ausgangspolymers werden in 120 ml molarer Kalilauge (KOH) unter Zusatz von 5 ml 0,3 molaren Ammoniaks (NH₃) 3 Tage lang bei 40° C gelagert. Zwei Blindproben ohne Ausgangspolymer werden gleichzeitig angesetzt.

Nach der Lagerung werden eventuelle ölige Abscheidungen mit Filterpapier von der Oberfläche aufgenommen und entfernt. Von den ursprünglich 125 ml des Ansatzes wird eine Teilmenge von 100 ml entnommen und das Ammoniak daraus mit Hilfe einer Wasserdampfdestillation in 150 ml destilliertem Wasser, welches mit 10 ml 0,1 molarer Salzsäure (HCL) und einigen Tropfen Methylrot als Indikator versetzt ist, übergetrieben. Die Säure wird anschließend mit 0,1 normaler Natronlauge (NaOH) zurücktitriert.

Die Bestimmung der Langzeitstabilität der Lage erfolgte durch Lagerung des Faser- bzw. Separatormaterials in einer 30%igen, wässrigen Kalilauge-Lösung bei einer Temperatur von 85°C über einen Zeitraum von 8 Tagen. Nach Entfernung des Faser- bzw. Separatormaterials und Waschen mit destilliertem Wasser bis zur Neutralität erfolgt abermals eine Bestimmung des AmmoniakBindevermögens wie vorab beschrieben.

Der Abbau der Ammoniak-Bindekapazität errechnet sich durch den Quotienten aus Bindevermögen nach der Lagerung und dem Bindevermögen vor der Lagerung.

### Ausführungsbeispiel:

A) Ammoniakbindende Polyolefin-Fasern wurden beispielhaft nach folgenden Verfahren hergestellt
   A1-1: Einsatz einer Kern-Mantel-Faser mit einem Kern aus einem mit Acrylsäure gepfropften Polypropylen und einem Mantel aus nichtfunktionalisiertem Polyethylen.
      Als Kern-Polymer wurde ein Polypropylen verwendet, welches durch chemische Pfropfung mit etwa 5.5 % Acrylsäure (AS) modifiziert wurde, Das verwendete Mantel-Polymer ist ein kommerziell verwendetes Polyethylen der Fa. DOW. Das Kem-Mantel-Verhältnis betrug 50:50. Der erzielte Titer der Fasern lag bei ca. 1.7 dtex. Das Ammoniakbindevermögen der Fasern betrug 0,39 mmol NH₃/g Fasermaterial.

### Vergleichsbeispiele:

A1-2: Einsatz einer Kern-Mantel-Faser mit einem Kern aus einem mit Acrylsäure gepfropften Polypropylen und einem Mantel aus mit Acrylsäure gepfropften Polyethylen.
   Als Kern-Polymer wurde ein Polypropylen verwendet, welches durch chemische Pfropfung mit etwa 5.5 % Acrylsäure (AS) modifiziert wurde. Als Mantel-Polymer wurde ein modifiziertes Polyethylen verwendet, welches ebenfalls durch chemische Pfropfung mit etwa 6 % Acrylsäure (AS) modifiziert wurde. Das Kem-Mantel-Verhältnis betrug 50:50. Der erzielte Titer der Fasern lag bei ca. 2.0 dtex. Das Ammoniakbindevermögen der Fasern betrug 0,55 mmol NH₃/g Fasermaterial.
   Vergleichsbeispiel A 2: Einsatz einer Kern-Mantel-Faser mit einem "Kern" aus Polypropylen und einem "Mantel" aus einem mit Acrylsäure gepfropften Polyethylen.
   Das Kem-Mantel-Verhältnis betrug 50:50. Der erzielte Titer der Fasern lag bei ca. 1.7 dtex. Das Ammoniakbindevermögen der Fasern betrug 0,38 mmol NH₃/g Fasermaterial. Die so hergestellte Faser ist in DE 102005005852 A1 beschrieben.

B) Vliesstoffe, die aus den zuvor beschriebenen Fasern hergestellt wurden:
   B 1-1: Die unter A 1-1 genannten modifizierten Kern-Mantel-Fasern wurden dispergiert und zu 100% Anteil zu einem Nassvliesstoff gelegt. Der entstandene Vliesstoff mit einem Flächengewicht von 60 g/m² wurde anschließend bei 125 °C thermisch gebunden und auf eine Dicke von 180 µm kalandert. Das gemessene Ammoniakbindevermögen betrug 0,38 mmol NH₃ /g Vliesstoff.
   B 1-2: Es wurden 70% der Kern-Mantel-Fasern gemäß A1-1 mit 30% reinen Polypropylen-Fasern mit einem Titer von 0.8 dtex (Fa. Daiwabo, JP) dispergiert und ein Nassvliesstoff gelegt. Der entstandene Vliesstoff mit einem Flächengewicht von 60 g/m² wurde anschließend bei 125 °C thermisch gebunden und auf eine Dicke von 140 µm kalandert. Das gemessene Ammoniakbindevermögen betrug 0,28 mmol NH₃/g Vliesstoff.
   B 1-3: Es wurden 85% der Kern-Mantel-Fasern gemäß A1-1 mit 15% Splitfasern (Polymere PP / EVOH; 32 Segmente) mit einem Titer von 3,3 dtex (Fa. Daiwabo, JP) dispergiert und ein Nassvliesstoff gelegt. Durch Einbringung hoher mechanischer Energie während der Dispergierung konnte ein Aufsplitten der oben genannten Splitfaser erzielt werden. Der entstandene Vliesstoff mit einem Flächengewicht von 60 g/m² wurde anschließend bei 125 °C thermisch gebunden und auf eine Dicke von 140 µm kalandert. Das gemessene Ammoniakbindevermögen betrug 0,33 mmol NH₃/g Vliesstoff.
   B 1-5: Die unter A 1-1 beschriebenen Fasern wurden zu einem Trockenvliesstoff verarbeitet. Der entstandene Vliesstoff mit einem Flächengewicht von 60 g/m² wurde anschließend bei 125 °C thermisch gebunden und auf eine Dicke von 180 µm kalandert. Das gemessene Ammoniakbindevermögen betrug 0,36 mmol NH₃/g Vliesstoff. Die dabei eingesetzten Fasern wurden hinsichtlich ihrer Morphologie dem Trockenvlies-Prozess angepasst. Es wurde eine erhöhte Schnittlänge gewählt, um eine Kräuselung zu bewirken.

### Vergleichsbeispiele (Nullproben):

B 1-4: Dieses Beispiel beschreibt eine Lage, die zu 100% aus den unter A 1-2 beschriebenen Fasern besteht. Die Fasern wurden dispergiert und daraus ein Nassvliesstoff gelegt. Der entstandene Vliesstoff mit einem Flächengewicht von 60 g/m² wurde anschließend bei 127°C thermisch gebunden und auf eine Dicke von 180 µm kalandert. Das gemessene Ammoniakbindevermögen betrug 0,53mol NH₃/g Vliesstoff.
B 2-1: Es wurde das kommerziell erhältliche Produkt FS 2226 (Flächengewicht von 60 g/m²; Dicke von 180 µm) herangezogen, welches aus nicht im Sinne der Erfindung nicht-funktionalisierten Polyolefinfasern besteht. Das gemessene Ammoniakbindevermögen betrug 0 mmol NH₃/g Lagenmaterial,
B 2-2: Es wurde eine in DE 102005005852 A1 beschriebene Lage verwendet, welche aus Fasern besteht, die im Mantel funktionalisiert sind (Vergleichsbeispiel A 2). Das gemessene Ammoniakbindevermögen betrug 0.31 mmol NH₃/g Lagenmaterial.
B 2-3: Es wurde der kommerziell erhältliche Vliesstoff 700/77 der Fa. Scimat, UK verwendet, welcher durch UV-induzierte Pfropfung von Acrylsäure obertlächenfunktionalisiert wurde. Das gemessene Ammoniakbindevermögen betrug 0.29 mmol NH₃ /g Vliesstoff.
B 2-4: Es wurde der kommerziell erhältliche Vliesstoff FV 4365 der Fa. Japan Vilene Co., Japan verwendet, welcher durch Sulfonierung mittels Oleum oberflächenfunktionalisiert wurde. Das gemessene Ammoniakbindevermögen betrug 0.32 mmol NH₃ / g Vliesstoff.
B 2-5: Es wurde der kommerziell erhältliche Vliesstoff PZ P64 L der Fa. Daiwabo, Japan verwendet, welcher durch Sulfonierung mit gasförmigem SO3 oberflächenfunktionalisiert wurde. Das gemessene Ammoniakbindevermögen betrug 0.15 mmol NH₃ / g Vliesstoff.

Die nachfolgende Tabelle 1 zeigt eine Übersicht über das Ammoniakbindevermögen der zuvor beschriebenen Ausführungsbeispiele und Vergleichsbeispiele (Nullproben).

Das Ammoniakbindevermögen wird in mmol Ammoniak pro Gramm Lagenmaterial angegeben.

**Tabelle 1:**

| Beispiel | Funktionalisierung | Ammoniak-Binde-Vermögen [mmol NH₃/g] | Ammoniak-Binde-Vermögen nach Lagerung [mmol NH₃/g] | Verbleibendes Ammoniak-Binde-Vermögen nach Lagerung [%] |
|---|---|---|---|---|
| A1-1 | Innen-funktionalisierte Faser | 0,39 | 0,36 | 92 |
| A1-2 | Innen- und außenfunktionalisierte Faser | 0,55 | 0,42 | 76 |
| A2 | Außenfunktionalisierte Faser | 0,38 | 0,15 | 40 |
| B1-1 | Vliesstoff mit innenfunktionalisierter Faser | 0.38 | 0,32 | 84 |
| B1-2 | Vliesstoff mit innenfunktionalisierter Faser | 0,28 | 0,22 | 79 |
| B1-3 | Vliesstoff mit innenfunktionalisierter Faser | 0.33 | 0,26 | 79 |
| B1-4 | Vliesstoff mit innenund außen funktionalisierter Faser | 0,53 | 0,41 | 77 |
| B1-5 | Analog B1-1, aber Trockenvliesstoff | 0,36 | 0,29 | 81 |
| B2-1 | Vliesstoff mit nichtfunktionaiisierten Fasern | <0,01 | < 0,01 | n.d. |
| B2-2 | Vliesstoff mit nur außenfunktionatisienen Fasern | 0,31 | 0,13 | 42 |
| B2-3 | Vliesstoff, oberflächen-funktionalisiert durch AS-Propfung | 0,29 | 0,08 | 28 |
| B2-4 | Vliesstoff, oberflächenfunktionalisiert durch Sulfonierung in wässriger Phase | 0,32 | 0,10 | 31 |
| B2-5 | Vliesstoff, oberflächenfunktionalisiert durch Sulfonierung in gasförmiger Phase | 0,15 | 0,04 | 27 |

### C) Ergebnisse zur Untersuchung der Selbstentladung von Batterien:

Die in B hergestellten Vliesstoffe wurden als Separatoren in Batterien eingebaut und hinsichtlich ihres Einflusses auf die Selbstentladung (SE) getestet. Zu diesem Zweck wurden jeweils 5 Nickel-Metallhydrid-Zellen der Baugröße AA mit einer Kapazität von 1600 mAh hergestellt, welche Separatoren nach B1-1, bzw. der Vergleichsbeispiels B2-1 und B1-4 enthielten. Die Selbstentladungen (SE) wurden bei unterschiedlichen Bedingungen in % gemessen, dabei gibt die Selbstentladung die verlorene Ladung in % an.

Tabelle 2 zeigt die Ergebnisse in einer Übersicht. In der Tabelle steht d für Tage. Die Temperatur dokumentiert die Lagerungstemperatur der Batterien.

**Tabelle 2:**

| Separator | Ammoniakbindung (mmol/g) | SE(%) (28 d; 20 °C) | SE (%) (7 d; 45 °C) | SE (%) (3 d; 60°C) |
|---|---|---|---|---|
| B2-1 | 0 | 28-30 | 33-36 | 60-65 |
| B1-1 | 0.38 | 17 | 21 | 42 |
| B1-4 | 0.55 | 16 | 19 | 27 |

Zur Überprüfung des erfindungsgemäßen Effekts der Ammoniakbindung wurde folgendes Experiment durchgeführt:

Ein Polyolefin, welches durch chemische Propfung mit Acrylsäure funktionalisiert wurde, wurde gemahlen und in zwei verschiedene Größenfraktionen aufgeteilt.

Fraktion 1 zeigte Partikelgrößen zwischen 400 und 500 µm, Fraktion 2 Partikelgrößen zwischen 150 und 250 µm. Von beiden Fraktionen wurde das Ammoniakbindevermögen bestimmt.

Es zeigte sich, dass das Bindevermögen in beiden Fällen bei (0,55 +/- 0,05) mmol/g lag, obwohl sich die Oberfläche der beiden Fraktionen um mehr als eine Größenordnung unterschied. Daraus kann geschlossen werden, dass die Bindung des Ammoniaks nicht bzw. nicht ausschließlich ein Oberflächeneffekt ist, sondern (bevorzugt) ein Tiefeneffekt.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Lage zur Verwendung als Separator in elektrochemischen Zellen, mit Fasern, die zumindest einen ersten Stoff aufweisen, durch welchen Ammoniak oder Ammoniakverbindungen chemisch und/ oder physikalisch bindbar sind, wobei der erste Stoff in Volumenbereichen der Fasern vorliegt, deren Oberflächen von einem zweiten Stoff umhüllt sind, und wobei die Volumenbereiche als Kerne und die Fasern als Kern-Mantel-Fasern ausgebildet sind,
**dadurch gekennzeichnet, dass** der erste Stoff als erstes Polymer ausgebildet ist und der zweite Stoff als zweites, sich vom ersten Polymer unterscheidendes Polymer ausgebildet ist, wobei das erste und das zweite Polymer als Polyolefine ausgebildet sind und wobei das erste Polymer als Polyolefin ausgebildet ist, welches durch ungesättigte organische Säuren und/ oder Säurederivate modifiziert ist.

2. Lage nach Anspruch 1, **gekennzeichnet durch** einen Anteil der Fasern von mindestens 30 Gew.-%.

3. Lage nach Anspruch 1 oder 2, **dadurch gekennzeichnet, dass** das erste oder das erste und das zweite Polymer als durch Copolymerisation gebildetes Polymer ausgebildet ist/ sind.

4. Lage nach Anspruch 1 oder 2, **dadurch gekennzeichnet, dass** das erste oder das erste und das zweite Polymer als durch Pfropfung gebildetes Polymer ausgebildet ist/ sind.

5. Lage nach Anspruch 1 oder 2, **dadurch gekennzeichnet, dass** das erste oder das erste und das zweite Polymer als durch reaktive Extrusion gebildetes Polymer ausgebildet ist/ sind.

6. Lage nach einem der Ansprüche 1 bis 5, **dadurch gekennzeichnet, dass** zwischen dem ersten Polymer und dem sich vom ersten Polymer unterscheidenden zweiten Polymer eine Grenzschicht ausgebildet ist.

7. Lage nach einem der Ansprüche 1 bis 6, **dadurch gekennzeichnet dass** neben den Fasern weitere, sich von diesen unterscheidende zweite Fasern vorliegen, die gegenüber konzentrierter Lauge hydrolysebeständig sind.

8. Lage nach einem der Ansprüche 1 bis 7, **gekennzeichnet durch** hydrophile Eigenschaften, welche **durch** eine Fluorierung, eine Plasmabehandlung, eine Sulfonierung, **durch** gepfropfte polare ungesättigte organische Substanzen oder **durch** eine Hydrophilierung mittels eines Netzmittels erreicht sind.

9. Lage nach einem der Ansprüche 1 bis 8, **gekennzeichnet durch** ein Flächengewicht von 15 bis 300 g/m², vorzugweise von 25 bis 150 g/m².

10. Lage nach einem der Ansprüche 1 bis 9, **gekennzeichnet durch** eine Dicke von 20 bis 400 µm, vorzugsweise von 40 bis 250 µm.

11. Lage nach einem der Ansprüche 1 bis 10, **gekennzeichnet durch** eine Ausgestaltung als Vliesstoff, welcher **durch** eine Nassvlies-Technologie gefertigt ist, welcher **durch** eine Trockenvlies-Technologie gefertigt ist, welcher **durch** eine Herstellung mittels Spinnvlies-Technologie gefertigt ist oder welcher **durch** eine Herstellung mittels Meltblown-Technologie gefertigt ist.

12. Elektrochemische Zelle mit einem Gehäuse, wobei das Gehäuse mindestens eine positive und eine negative Elektrode sowie ein Material aufnimmt, welches den Transport von Ladungsträgern erlaubt, und wobei ein Separator die Elektroden trennt, **dadurch gekennzeichnet, dass** der Separator eine Lage nach einem der vorangehenden Ansprüche umfasst.

## Claims

1. Ply for use as a separator in electrochemical cells, comprising fibres comprising at least a first stuff wherethrough ammonia or ammonia compounds are chemically and/or physically bindable, wherein the first stuff is present in volume regions of the fibres, the surfaces of which are enveloped by a second stuff, and wherein the volume regions are constructed as cores and the fibres as sheath-core fibres, **characterized in that** the first stuff is constructed as a first polymer and the second stuff is constructed as a second polymer which differs from the first polymer, wherein the first and second polymers are constructed as polyolefins and wherein the first polymer is constructed as a polyolefin modified by unsaturated organic acids and/or acid derivatives.

2. Ply according to Claim 1, **characterized by** an at least 30% by weight proportion accounted for by the fibres.

3. Ply according to Claim 1 or 2, **characterized in that** the first polymer or the first and second polymers is/are constructed as a polymer formed by chain-growth addition copolymerization.

4. Ply according to Claim 1 or 2, **characterized in that** the first polymer or the first and second polymers is/are constructed as a polymer formed by grafting.

5. Ply according to Claim 1 or 2, **characterized in that** the first polymer or the first and second polymers is/are constructed as a polymer formed by reactive extrusion.

6. Ply according to any one of Claims 1 to 5, **characterized in that** there is a boundary layer between the first polymer and the second polymer which differs from the first polymer.

7. Ply according to any one of Claims 1 to 6, **characterized in that** in addition to the fibres there are present further, second fibres which differ therefrom and which are hydrolysis-resistant to concentrated alkali.

8. Ply according to any one of Claims 1 to 7, **characterized by** hydrophilic properties obtained through a fluorination, a plasma treatment, a sulphonation, through grafted polar unsaturated organic substances or through a hydrophilicization with a wetting agent.

9. Ply according to any one of Claims 1 to 8, **characterized by** a basis weight of 15 to 300 g/m², preferably of 25 to 150 g/m².

10. Ply according to any one of Claims 1 to 9, **characterized by** a thickness of 20 to 400 µm, preferably of 40 to 250 µm.

11. Ply according to any one of Claims 1 to 10, **characterized by** an embodification as a nonwoven fabric fabricated through a wet-laid technology, through a dry-laid technology, through a production using spunbond technology or through a production using meltblown technology.

12. Electrochemical cell having a casing, wherein the casing accommodates at least one positive and one negative electrode and also a material which permits the transportation of charge carriers, and wherein a separator separates the electrodes, **characterized in that** the separator comprises a ply according to any one of the preceding claims.

## Revendications

1. Couche destinée à être utilisée comme séparateur dans des cellules électrochimiques et présentant des fibres qui présentent au moins une première substance par laquelle l'ammoniac ou des composés d'ammoniac peuvent être reliés chimiquement et/ou physiquement,
la première substance étant présente dans des parties du volume des fibres dont la surface est entourée par une deuxième substance, les parties de volume étant configurées comme âmes et les fibres comme fibres à âme et enveloppe,
**caractérisée en ce que**
la première substance est configurée comme premier polymère et la deuxième substance comme deuxième polymère différent du premier polymère,
**en ce que** le premier et le deuxième polymère sont configurés comme polyoléfines et
**en ce que** le premier polymère est configuré comme polyoléfine modifiée par acide organique insaturé et/ou dérivés d'acide organique insaturé.

2. Couche selon la revendication 1, **caractérisée par** une teneur en fibres d'au moins 30 % en poids.

3. Couche selon les revendications 1 ou 2, **caractérisée en ce que** le premier polymère ou le premier et le deuxième polymère sont configurés comme polymères formés par copolymérisation_{.}

4. Couche selon les revendications 1 ou 2, **caractérisée en ce que** le premier polymère ou le premier et le deuxième polymère sont configurés comme polymères formés par greffage.

5. Couche selon les revendications 1 ou 2, **caractérisée en ce que** le premier polymère ou le premier et le deuxième polymère sont configurés comme polymères formés par extrusion réactive.

6. Couche selon l'une des revendications 1 à 5, **caractérisée en ce qu'**une couche frontière est formée entre le premier polymère et le deuxième polymère différent du premier polymère.

7. Couche selon l'une des revendications 1 à 6, **caractérisée en ce qu'**en plus des fibres, elle présente des deuxième fibres qui sont différentes des premières et qui résistent à une hydrolyse dans une lessive concentrée.

8. Couche selon l'une des revendications 1 à 7, **caractérisée par** des propriétés hydrophiles obtenues par fluoration, traitement au plasma, sulfonation, par des substances organiques polaires insaturées et greffées ou par hydrophilisation au moyen d'un agent mouillant.

9. Couche selon l'une des revendications 1 à 8, **caractérisée en ce que** son poids par unité de surface est de 15 à 300 g/m² et de préférence de 25 à 150 g/m².

10. Couche selon l'une des revendications 1 à 9, **caractérisée en ce que** son épaisseur est de 200 à 400 µm et de préférence de 40 à 250 µm.

11. Couche selon l'une des revendications 1 à 10, **caractérisée en ce qu'**elle est configurée comme foutre préparé par la technique de feutrage en conditions humides, par la technique de feutrage à sec, par la technique de feutrage à l'état filé ou par la technique de soufflage à l'état fondu.

12. Cellule électrochimique dotée d'un boîtier, le boîtier présentant au moins une électrode positive et une électrode négative et logeant un matériau qui permet le transport de porteurs de charge, un séparateur séparant les électrodes,
**caractérisée en ce que**
le séparateur comprend une couche selon 1' une des revendications précédentes.
